# EUROPEAN PATENT APPLICATION

(11) **EP 4 640 514 A1**
(43) Date of publication of application: **29.10.2025**
(21) Application number: 23910256.9
(22) Date of filing: 19.12.2023
(51) Int. Cl.: B60W 50/14, B60W 50/12, B60W 40/08

(54) **MONITORING METHOD AND APPARATUS, AND VEHICLE**

(30) Priority: 28.12.2022 CN 202211693257
(71) Applicant: Shenzhen Yinwang Intelligent Technologies Co., Ltd., Shenzhen, Guangdong 518110 (CN)
(72) Inventor: JIANG, Linqi, Shenzhen, Guangdong 518129 (CN)
(74) Representative: MERH-IP Matias Erny Reichl Hoffmann Patentanwälte PartG mbB
(86) International application number: PCT/CN2023/139806
(87) International publication number: WO 2024/140326

(57) **Abstract**

A monitoring method and apparatus, and a means of delivery are provided. The method includes: detecting that the means of delivery enables a first assisted driving level; obtaining environment information around the means of delivery; determining a first takeover capability level based on the environment information and the first assisted driving level, where the first takeover capability level is used for a takeover capability pre-warning of a driver; interacting with the driver based on the first takeover capability level, to obtain a first interaction result; and determining, based on the first interaction result, whether to adjust the first takeover capability level. According to the foregoing method, the driver can be monitored in a complex and changeable driving scenario, to effectively prevent a safety accident in an assisted driving mode.

## Description

This application claims priority to Chinese Patent Application No. 202211693257.0, filed with the China National Intellectual Property Administration on December 28, 2022 and entitled "MONITORING METHOD AND APPARATUS, AND MEANS OF DELIVERY", which is incorporated herein by reference in its entirety.

### TECHNICAL FIELD

Embodiments of this application relate to the field of intelligent vehicles, and more specifically, to a monitoring method and apparatus, and a means of delivery.

### BACKGROUND

Currently, an autonomous driving technology has emerged as a new development direction for future vehicles, and is increasingly popular. According to a level standard of the current autonomous driving technology, the autonomous driving technology may be classified into six levels: L₀ to L₅. A technology that has been implemented between the level L₂ and the level L₃ may be referred to as an assisted driving technology.

However, currently, there is no complete supervision system for a vehicle in an assisted driving mode, and the vehicle can take supervision measures only in some special scenarios, for example, eye-closed detection and hand-off detection. This supervision mode cannot cope with a complex and changeable driving scenario in the assisted driving mode. Consequently, driving safety of a driver in the assisted driving mode cannot be ensured.

### SUMMARY

Embodiments of this application provide a monitoring method and apparatus, and a means of delivery, so that a driver can be monitored in a complex and changeable driving scenario, to effectively prevent a safety accident in an assisted driving mode.

According to a first aspect, a monitoring method is provided. The method includes: detecting that a means of delivery enables a first assisted driving level; obtaining environment information around the means of delivery; determining a first takeover capability level based on the environment information and the first assisted driving level, where the first takeover capability level is used for a takeover capability pre-warning of a driver; interacting with the driver based on the first takeover capability level, to obtain a first interaction result; and determining, based on the first interaction result, whether to adjust the first takeover capability level.

Optionally, the environment information around the means of delivery may include traveling road condition information of the means of delivery. The road condition information may indicate a type of a road on which the means of delivery currently travels. For example, the type of the road may include an asphalt road, a cement road, or a stone road. The environment information around the means of delivery may be obtained by a sensor deployed on the means of delivery. The sensor may include one or more of sensors such as a digital video recorder (digital video recorder, DVR), a gravity sensor, and an external camera (for example, a surround view camera).

Optionally, the means of delivery may automatically obtain the environment information around the means of delivery in a specific driving scenario (for example, a stone road, a cement road with a depression, or an asphalt road). Alternatively, after detecting that the first assisted driving level is enabled, the means of delivery may periodically obtain the environment information around the means of delivery.

Optionally, interaction with the driver may be performed in one or more of the following manners: through a voice, through a voice assistant, through a display of the means of delivery, through a prompt tone, and through a vibration ringtone.

It should be understood that, in this application, an assisted driving level or an assisted driving mode is not limited to a technology that has been implemented between a level L₂ and a level L₃ in the autonomous driving technology, any technology that can be provided by the means of delivery to assist the driver in driving may be considered as "enabling the assisted driving level or the assisted driving mode" in this application.

It should be further understood that the monitoring method provided in this application may be performed by the means of delivery, or may be performed by a server.

In this embodiment of this application, after determining the first takeover capability level, the means of delivery or the server can determine, based on a result of interaction with the driver, whether to adjust the first takeover capability level, to take a corresponding supervision measure based on a corresponding takeover capability level. This effectively prevents a safety accident in the assisted driving mode.

With reference to the first aspect, in some implementations of the first aspect, the method further includes: obtaining first driving behavior information and facial expression information of the driver, where the first driving behavior information indicates a driving status of the driver and/or a traveling status of the means of delivery; and the determining a first takeover capability level based on the environment information and the first assisted driving level includes: determining the first takeover capability level based on the first driving behavior information, the facial expression information, the environment information, and the first assisted driving level.

Optionally, the first driving behavior information and the facial expression information of the driver may be obtained by a sensor deployed on the means of delivery. For example, the first driving behavior information and/or the facial expression information of the driver may be obtained by a camera deployed in a cockpit of the means of delivery. For another example, the first driving behavior information may be obtained by an inertial sensor.

Optionally, the first driving behavior information, the facial expression information, the environment information, and the first assisted driving level may be input into a neural network model, to output the first takeover capability level. In addition, a weight of information input into the neural network model may be further adjusted, so that the determined first takeover capability level better adapts to current traveling of the means of delivery.

In this embodiment of this application, when the first takeover capability level is determined, in addition to the environment information around the means of delivery and the first assisted driving level, the first driving behavior information and the facial expression information of the driver are further considered. In this way, the first takeover capability level can be more accurately determined, to help take a subsequent monitoring measure.

With reference to the first aspect, in some implementations of the first aspect, the determining, based on the first interaction result, whether to adjust the first takeover capability level includes: determining, based on the first interaction result and the first driving behavior information, whether to adjust the first takeover capability level.

In this embodiment of this application, whether to adjust the first takeover capability level may be determined based on the first interaction result and the first driving behavior information. In this way, whether the first takeover capability level needs to be adjusted can be more accurately determined. This further ensures driving safety of the driver in the assisted driving mode.

With reference to the first aspect, in some implementations of the first aspect, the first driving behavior information includes at least one of the following content: driver status information, accelerator pedal opening degree information, brake pedal opening degree information, steering wheel angle information, steering wheel pressure information, and a quantity of times that a tire of the means of delivery crosses a road sideline within first preset duration.

The road sideline may be understood as a boundary between road land and building land on two sides of the road, or the road sideline may be understood as a solid line on a lane. The quantity of times that the tire of the means of delivery crosses the road sideline within the first preset duration may be represented as, for example, a quantity of times that the tire of the vehicle crosses the solid line on the lane within five minutes.

With reference to the first aspect, in some implementations of the first aspect, the first interaction result indicates that the driver confirms the first takeover capability level, and the determining, based on the first interaction result, whether to adjust the first takeover capability level includes: determining, based on the first interaction result, to maintain the first takeover capability level; and the method further includes: determining, based on the first driving behavior information and the first interaction result, that a behavior of the driver is inconsistent with the first interaction result.

That the behavior of the driver is inconsistent with the first interaction result may be understood as that the driver has a deception behavior. For example, the first interaction result indicates that the driver knows that the driver needs to step on a brake pedal of the means of delivery in an emergency at the first takeover capability level. However, when an emergency actually occurs, the first driving behavior information indicates that the driver does not step on the brake pedal. In this case, it may be determined that the driver has the deception behavior.

Optionally, before it is determined that the behavior of the driver is inconsistent with the first interaction result, whether the driver has the deception behavior may alternatively be determined based on the first interaction result. For example, the means of delivery performs voice interaction with the driver to obtain the first interaction result, where the first interaction result may include: voice text information and driver emotion information. The voice text information indicates that the driver confirms that the driver is not fatigued during driving, but the driver emotion information indicates that the driver is in a fatigue driving state. In this case, it may be determined that the driver has the deception behavior.

Optionally, after it is determined, based on the first interaction result, that the driver has the deception behavior, whether the behavior of the driver is consistent with the first interaction result may no longer be determined.

With reference to the first aspect, in some implementations of the first aspect, the method further includes: adjusting the first takeover capability level to a second takeover capability level, where the second takeover capability level corresponds to a second assisted driving level, and the second assisted driving level is lower than the first assisted driving level.

In this embodiment of this application, after it is detected that the behavior of the driver is inconsistent with the first interaction result, a takeover capability level may be increased, and an assisted driving level may be decreased. In this way, traveling safety of the means of delivery is ensured, and the deception behavior of the driver can be punished to some extent.

With reference to the first aspect, in some implementations of the first aspect, the interacting with the driver based on the first takeover capability level includes: interacting with the driver at a first frequency within second preset duration, and the method further includes: interacting with the driver at a second frequency within the second preset duration, to obtain a second interaction result, where the second frequency is higher than the first frequency.

For example, the means of delivery and/or the server may interact with the driver twice within five minutes before detecting that the driver has the deception behavior, and may interact with the driver four times within five minutes after detecting that the driver has the deception behavior.

In this embodiment of this application, after it is detected that the behavior of the driver is inconsistent with the first interaction result, a period of interaction with the driver can be shortened. In this way, interaction with the driver can be performed more closely, to further ensure traveling safety of the means of delivery.

With reference to the first aspect, in some implementations of the first aspect, the interacting with the driver based on the first takeover capability level includes: interacting with the driver at a first frequency within second preset duration, and the method further includes: interacting with the driver at a second frequency within the second preset duration, to obtain a second interaction result, where the second frequency is higher than the first frequency; and determining, based on the second interaction result, whether to adjust the second takeover capability level.

In this embodiment of this application, after it is detected that the behavior of the driver is inconsistent with the first interaction result, a period of interaction with the driver may be shortened, and whether to adjust the second takeover capability level may be determined based on a latest result of interacting with the driver. In this way, whether to adjust a takeover capability level can be dynamically determined based on the result of interaction with the driver. This further effectively prevents a safety accident in the assisted driving mode.

With reference to the first aspect, in some implementations of the first aspect, the obtaining first driving behavior information includes: obtaining the first driving behavior information at a third frequency within third preset duration, and the method further includes: obtaining second driving behavior information at a fourth frequency within the third preset duration, where the fourth frequency is higher than the third frequency.

For example, the means of delivery and/or the server may obtain the first driving behavior information twice within five minutes before detecting that the driver has the deception behavior, and may obtain the second driving behavior information four times within five minutes after detecting that the driver has the deception behavior.

Optionally, content specifically included in the first driving behavior information and the second driving behavior information may be the same or different.

In this embodiment of this application, after it is detected that the behavior of the driver is inconsistent with the first interaction result, a period of obtaining driving behavior information can be shortened. In this way, the driving behavior information can be obtained more closely, to further ensure traveling safety of the means of delivery.

With reference to the first aspect, in some implementations of the first aspect, the obtaining first driving behavior information includes: obtaining the first driving behavior information at a third frequency within third preset duration, and the method further includes: obtaining second driving behavior information at a fourth frequency within the third preset duration, where the fourth frequency is higher than the third frequency; and the determining, based on the second interaction result, whether to adjust the second takeover capability level includes: determining, based on the second interaction result and the second driving behavior information, whether to adjust the second takeover capability level.

In this embodiment of this application, after it is detected that the behavior of the driver is inconsistent with the first interaction result, a period of interaction with the driver may be shortened, and whether to adjust the second takeover capability level may be determined based on a latest result of interaction with the driver and the second driving behavior information. In this way, whether to adjust the second takeover capability level can be more accurately determined, to ensure traveling safety of the means of delivery.

With reference to the first aspect, in some implementations of the first aspect, the second driving behavior information includes driver status information, and the method further includes: determining, based on the driver status information, whether to send alarm information.

Optionally, the driver status information may include one or more of a fatigue status of the driver, a heart rate of the driver, an emotion status of the driver, and a response speed of the driver.

Optionally, when it is determined, based on the driver status information, that the driver is in a poor driving status or is suddenly ill, it may be determined to send the alarm information.

Optionally, if the monitoring method is performed by the means of delivery, the means of delivery may send the alarm information to the server, or send the alarm information to a public security department or a first-aid center. If the foregoing monitoring method is performed by the server, the server may send the alarm information to the means of delivery to report an alarm to the driver, or send the alarm information to the public security department or the first-aid center.

With reference to the first aspect, in some implementations of the first aspect, the method further includes: disabling an assisted driving function of the means of delivery.

In this embodiment of this application, if it is detected that the driver has the deception behavior, the assisted driving function of the means of delivery may be disabled. In this way, traveling safety of the means of delivery is ensured, and the deception behavior of the driver can be punished to some extent.

According to a second aspect, a monitoring apparatus is provided. The apparatus includes an obtaining unit and a processing unit. The processing unit is configured to detect that a means of delivery enables a first assisted driving level. The obtaining unit is configured to obtain environment information around the means of delivery. The processing unit is further configured to: determine a first takeover capability level based on the environment information and the first assisted driving level, where the first takeover capability level is used for a takeover capability pre-warning of a driver; interact with the driver based on the first takeover capability level, to obtain a first interaction result; and determine, based on the first interaction result, whether to adjust the first takeover capability level.

With reference to the second aspect, in some implementations of the second aspect, the obtaining unit is further configured to obtain first driving behavior information and facial expression information of the driver, where the first driving behavior information indicates a driving status of the driver and/or a traveling status of the means of delivery. The processing unit is specifically configured to determine the first takeover capability level based on the first driving behavior information, the facial expression information, the environment information, and the first assisted driving level.

With reference to the second aspect, in some implementations of the second aspect, the processing unit is specifically configured to determine, based on the first interaction result and the first driving behavior information, whether to adjust the first takeover capability level.

With reference to the second aspect, in some implementations of the second aspect, the first driving behavior information includes at least one of the following content: driver status information, accelerator pedal opening degree information, brake pedal opening degree information, steering wheel angle information, steering wheel pressure information, and a quantity of times that a tire of the means of delivery crosses a road sideline within first preset duration.

With reference to the second aspect, in some implementations of the second aspect, the first interaction result indicates that the driver confirms the first takeover capability level. The processing unit is specifically configured to determine, based on the first interaction result, to maintain the first takeover capability level. The processing unit is further configured to determine, based on the first driving behavior information and the first interaction result, that a behavior of the driver is inconsistent with the first interaction result.

With reference to the second aspect, in some implementations of the second aspect, the processing unit is further configured to adjust the first takeover capability level to a second takeover capability level, where the second takeover capability level corresponds to a second assisted driving level, and the second assisted driving level is lower than the first assisted driving level.

With reference to the second aspect, in some implementations of the second aspect, the processing unit is specifically configured to interact with the driver at a first frequency within second preset duration. The processing unit is further configured to interact with the driver at a second frequency within the second preset duration, to obtain a second interaction result, where the second frequency is higher than the first frequency.

With reference to the second aspect, in some implementations of the second aspect, the processing unit is specifically configured to interact with the driver at a first frequency within second preset duration. The processing unit is further configured to: interact with the driver at a second frequency within the second preset duration, to obtain a second interaction result, where the second frequency is higher than the first frequency; and determine, based on the second interaction result, whether to adjust the second takeover capability level.

With reference to the second aspect, in some implementations of the second aspect, the obtaining unit is specifically configured to obtain the first driving behavior information at a third frequency within third preset duration. The processing unit is further configured to obtain second driving behavior information at a fourth frequency within the third preset duration, where the fourth frequency is higher than the third frequency.

With reference to the second aspect, in some implementations of the second aspect, the obtaining unit is specifically configured to obtain the first driving behavior information at a third frequency within third preset duration. The processing unit is further configured to: obtain second driving behavior information at a fourth frequency within the third preset duration, where the fourth frequency is higher than the third frequency; and determine, based on the second interaction result and the second driving behavior information, whether to adjust the second takeover capability level.

With reference to the second aspect, in some implementations of the second aspect, the second driving behavior information includes driver status information. The processing unit is further configured to determine, based on the driver status information, whether to send alarm information.

With reference to the second aspect, in some implementations of the second aspect, the processing unit is further configured to disable an assisted driving function of the means of delivery.

According to a third aspect, a monitoring apparatus is provided. The apparatus includes at least one processor and a memory. The at least one processor is coupled to the memory, and is configured to read and execute instructions in the memory, so that the apparatus implements the method according to the first aspect and the implementations of the first aspect.

According to a fourth aspect, a computer-readable storage medium is provided. The computer-readable storage medium stores program code. When the computer program code is run on a computer, the computer is enabled to perform the method according to the first aspect and the implementations of the first aspect.

According to a fifth aspect, a chip is provided. The chip includes a circuit, and the circuit is configured to perform the method according to the first aspect and the implementations of the first aspect.

According to a sixth aspect, a means of delivery is provided, and includes the monitoring apparatus according to any one of the second aspect or the implementations of the second aspect.

According to a seventh aspect, a server is provided, and includes the monitoring apparatus according to any one of the second aspect or the implementations of the second aspect.

According to an eighth aspect, a monitoring system is provided, and includes the means of delivery according to the sixth aspect and the server according to the seventh aspect.

### BRIEF DESCRIPTION OF DRAWINGS

FIG. 1 is a functional diagram of a means of delivery according to an embodiment of this application;
FIG. 2 is a schematic flowchart of a monitoring method according to an embodiment of this application;
FIG. 3 is a schematic flowchart of another monitoring method according to an embodiment of this application;
FIG. 4A and FIG. 4B are a schematic flowchart of another monitoring method according to an embodiment of this application;
FIG. 5 is a schematic flowchart of another monitoring method according to an embodiment of this application;
FIG. 6(a) to FIG. 6(g) are a diagram of an application scenario to which a monitoring method is applicable according to an embodiment of this application;
FIG. 7 is a diagram of a monitoring apparatus according to an embodiment of this application; and
FIG. 8 is a diagram of another monitoring apparatus according to an embodiment of this application.

### DESCRIPTION OF EMBODIMENTS

In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

The following describes technical solutions of embodiments in this application with reference to accompanying drawings.

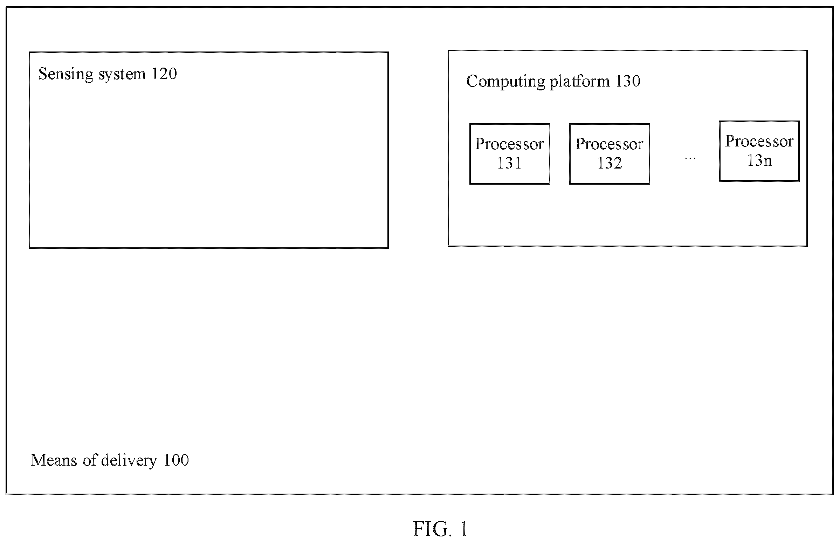

FIG. 1 is a functional diagram of a means of delivery 100 according to an embodiment of this application. It should be understood that FIG. 1 and related descriptions are merely examples, and do not limit the means of delivery in embodiments of this application.

The means of delivery 100 may include a plurality of subsystems, such as a sensing system 120 and a computing platform 130. Optionally, the means of delivery 100 may include more or fewer subsystems, and each subsystem may include one or more components. In addition, all subsystems and components of the means of delivery 100 may be interconnected in a wired or wireless manner.

The sensing system 120 may include several types of sensors used to sense information about an ambient environment of the means of delivery 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

Some or all of functions of the means of delivery 100 may be controlled by the computing platform 130. The computing platform 130 may include processors 131 to 13n (where n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement corresponding functions.

The computing platform 130 may control the functions of the means of delivery 100 based on inputs received from various subsystems (for example, the sensing system 120). For example, the computing platform 130 can control, based on an input received from the sensing system 120, a vehicle door of the means of delivery to be open or closed. In some embodiments, the computing platform 130 may be configured to control many aspects of the means of delivery 100 and the subsystems of the means of delivery 100.

Optionally, the foregoing components are merely examples. During actual application, components in the foregoing modules may be added or deleted according to an actual requirement. FIG. 1 should not be understood as a limitation on embodiments of this application.

The means of delivery 100 in this application may include a road transportation means, a water transportation means, an air transportation means, an industrial device, an agricultural device, an entertainment device, or the like. For example, the means of delivery 100 may be a vehicle. The vehicle is a vehicle in a broad sense, and may be a transportation means (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), a recreation device, or a toy vehicle. A type of the vehicle is not specifically limited in embodiments of this application. For another example, the means of delivery 100 may be a transportation means like an aircraft or a ship.

The following uses an example in which the means of delivery 100 is a vehicle, to describe a technical problem that needs to be resolved in this application and technical solutions used in this application.

Currently, an autonomous driving technology has emerged as a new development direction for future vehicles, and is increasingly popular. According to a level standard of the current autonomous driving technology, the autonomous driving technology may be classified into six levels: L₀ to L₅. L₀ may indicate conventional manual driving without autonomous driving; L₁ may indicate assisted driving; L₂ may indicate partial autonomous driving of a vehicle; L₃ may indicate conditional autonomous driving of the vehicle; L₄ may indicate highly autonomous driving of the vehicle; and L₅ may indicate complete autonomous driving performed by the vehicle without manual control. Different autonomous driving levels have different requirements on control, observation, and support of a vehicle driving subject. For example, the vehicle may implement automatic control of active braking at the level L₁, to free two feet of a driver. The vehicle may automatically control a traveling direction of the vehicle at the level L₂, to free hands of the driver. The vehicle may sense a traveling environment of the vehicle in a specific condition at the level L₃, to free eyes of the driver. The vehicle may implement self-driving at the level L₄, so that the driver does not need to care about driving.

In an autonomous driving process, an accident may occur if the driver does not meet a requirement for a used autonomous driving technology level. For example, a technology that has been implemented between the level L₂ and the level L₃ may be usually referred to as an assisted driving technology. At the assisted driving level, the driver is still a manager of a vehicle, and an autonomous driving system can only provide assistance. In other words, the driver still needs to monitor a traveling environment of the vehicle, and cannot completely hand over a driving determining capability to the vehicle. An accident may occur if the driver trusts the autonomous driving system too much. Currently, there are many reports of traffic accidents caused by insufficient takeover capabilities of drivers in an assisted driving mode at home and abroad, which need to be paid attention to. Therefore, it is particularly important to supervise and pre-warn a driving behavior of a driver in the assisted driving mode.

Currently, there is no complete supervision system for a vehicle in an assisted driving mode, and the vehicle can take supervision measures only in some special scenarios, for example, eye-closed detection and hand-off detection. This supervision mode cannot cope with a complex and changeable driving scenario in the assisted driving mode. Consequently, driving safety of a driver in the assisted driving mode cannot be ensured.

Embodiments of this application provide a monitoring method and apparatus, and a means of delivery, so that a driver can be monitored in a complex and changeable driving scenario, to effectively prevent a safety accident in an assisted driving mode.

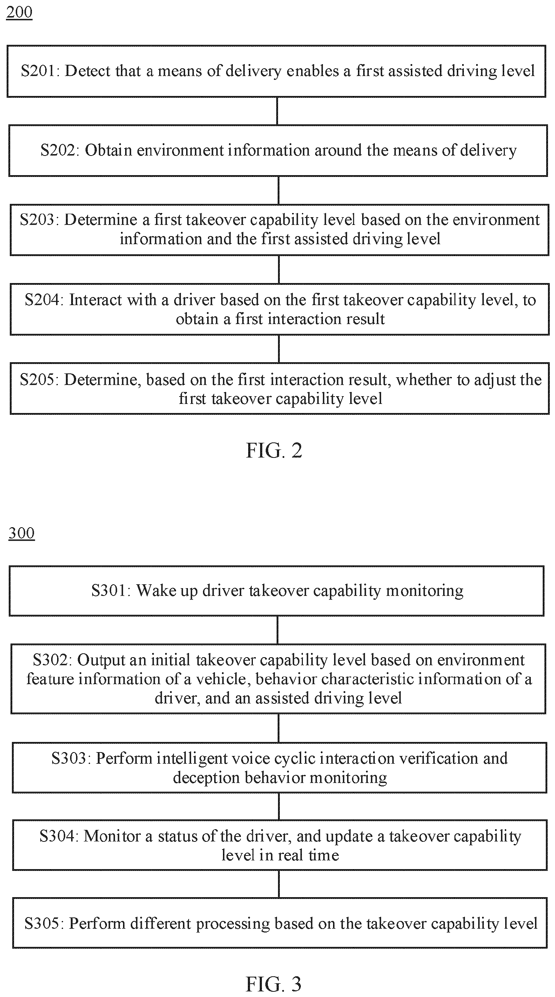

FIG. 2 is a schematic flowchart of a monitoring method according to an embodiment of this application. The method 200 may be performed by a means of delivery or a server. When the method 200 is performed by the means of delivery 100, the method 200 may be performed by the computing platform 130 in the means of delivery 100, or may be performed by a system-on-chip (system-on-chip, SoC) in the computing platform 130, or may be performed by a processor in the computing platform 130. The following describes the method 200 by using an example in which an execution body is a means of delivery. The method 200 may include step S201 to step S205.

S201: Detect that the means of delivery enables a first assisted driving level.

For example, when detecting an operation of tapping, by a driver, a display of the means of delivery to enable the first assisted driving level, the means of delivery may determine to enable the first assisted driving level.

For example, when receiving a voice instruction of enabling the first assisted driving level by the driver, the means of delivery may determine to enable the first assisted driving level.

It should be understood that, in this application, an assisted driving level or an assisted driving mode is not limited to a technology that has been implemented between a level L₂ and a level L₃ in the autonomous driving technology, any technology that can be provided by the means of delivery to assist the driver in driving may be considered as "enabling the assisted driving level or the assisted driving mode" in this application.

S202: Obtain environment information around the means of delivery.

Optionally, the environment information around the means of delivery may include traveling road condition information of the means of delivery. The road condition information may indicate a type of a road on which the means of delivery currently travels. For example, the type of the road may include an asphalt road, a cement road, or a stone road. The environment information around the means of delivery may be obtained by a sensor deployed on the means of delivery. The sensor may include one or more of sensors such as a DVR, a gravity sensor, and an external camera (for example, a surround view camera).

Optionally, the means of delivery may automatically obtain the environment information around the means of delivery in a specific driving scenario (for example, a stone road, a cement road with a depression, or an asphalt road). Alternatively, after detecting that the first assisted driving level is enabled, the means of delivery may periodically obtain the environment information around the means of delivery.

S203: Determine a first takeover capability level based on the environment information and the first assisted driving level.

In this application, the first takeover capability level may also be referred to as an initial takeover capability level, and the first takeover capability level may be used for a takeover capability pre-warning of the driver.

In an embodiment, in step S203, the method 200 further includes: obtaining first driving behavior information and facial expression information of the driver; and determining the first takeover capability level based on the first driving behavior information, the facial expression information, the environment information, and the first assisted driving level. In this way, the first takeover capability level can be more accurately determined, to help take a subsequent monitoring measure.

The first driving behavior information may indicate a driving status of the driver and/or a traveling status of the means of delivery.

Optionally, the first driving behavior information may include at least one of the following content: driver status information, accelerator pedal opening degree information, brake pedal opening degree information, steering wheel angle information, steering wheel pressure information, and a quantity of times that a tire of the means of delivery crosses a road sideline within first preset duration. The road sideline may be understood as a boundary between road land and building land on two sides of the road, or the road sideline may be understood as a solid line on a lane. The quantity of times that the tire of the means of delivery crosses the road sideline within the first preset duration may be represented as, for example, a quantity of times that the tire of the vehicle crosses the solid line on the lane within five minutes.

Optionally, the first driving behavior information and the facial expression information of the driver may be obtained by a sensor deployed on the means of delivery. For example, the first driving behavior information and/or the facial expression information of the driver may be obtained by a camera deployed in a cockpit of the means of delivery. For another example, the first driving behavior information may be obtained by an inertial sensor.

Optionally, the first driving behavior information, the facial expression information, the environment information, and the first assisted driving level may be input into a neural network model, to output the first takeover capability level. In addition, a weight of information input into the neural network model may be further adjusted, so that the determined first takeover capability level better adapts to current traveling of the means of delivery.

S204: Interact with the driver based on the first takeover capability level, to obtain a first interaction result.

Optionally, interaction with the driver may be performed in one or more of the following manners: through a voice, through a voice assistant, through the display of the means of delivery, through a prompt tone, and through a vibration ringtone.

For example, the first interaction result may indicate whether the driver knows a driving responsibility of the driver and an assisted driving permission of the means of delivery at the current takeover capability level.

S205: Determine, based on the first interaction result, whether to adjust the first takeover capability level.

For example, if the first interaction result indicates that the driver knows an assisted driving permission range of the means of delivery at the first takeover capability level, it may be determined to maintain the first takeover capability level. Alternatively, if the first interaction result indicates that the driver does not know an assisted driving permission range of the means of delivery at the first takeover capability level, the first takeover capability level may be adjusted.

In this embodiment of this application, after determining the first takeover capability level, the means of delivery can determine, based on a result of interaction with the driver, whether to adjust the first takeover capability level, to take a corresponding supervision measure based on a corresponding takeover capability level. This effectively prevents a safety accident in the assisted driving mode.

In an embodiment, in step S205, the means of delivery may determine, based on the first interaction result and the first driving behavior information, whether to adjust the first takeover capability level. In this way, whether the first takeover capability level needs to be adjusted can be more accurately determined. This further ensures driving safety of the driver in the assisted driving mode.

In an embodiment, the first interaction result indicates that the driver confirms the first takeover capability level, and a result of determining whether to adjust the first takeover capability level in step S205 is to maintain the first takeover capability level. After step S205, the method 200 may further include: determining, based on the first driving behavior information and the first interaction result, that a behavior of the driver is inconsistent with the first interaction result.

That the behavior of the driver is inconsistent with the first interaction result may be understood as that the driver has a deception behavior. For example, the first interaction result indicates that the driver knows that the driver needs to step on a brake pedal of the means of delivery in an emergency at the first takeover capability level. However, when an emergency actually occurs, the first driving behavior information indicates that the driver does not step on the brake pedal. In this case, it may be determined that the driver has the deception behavior.

Optionally, before determining that the behavior of the driver is inconsistent with the first interaction result, the means of delivery may alternatively determine, based on the first interaction result, whether the driver has the deception behavior. For example, the means of delivery performs voice interaction with the driver to obtain the first interaction result, where the first interaction result may include: voice text information and driver emotion information. The voice text information indicates that the driver confirms that the driver is not fatigued during driving, but the driver emotion information indicates that the driver is in a fatigue driving state. In this case, it may be determined that the driver has the deception behavior.

Optionally, after it is determined, based on the first interaction result, that the driver has the deception behavior, whether the behavior of the driver is consistent with the first interaction result may no longer be determined.

After detecting that the behavior of the driver is inconsistent with the first interaction result, the means of delivery may perform different processing.

In a possible implementation, the means of delivery may adjust the first takeover capability level to a second takeover capability level, where the second takeover capability level corresponds to a second assisted driving level, and the second assisted driving level is lower than the first assisted driving level. To be specific, after detecting that the behavior of the driver is inconsistent with the first interaction result, the means of delivery may increase a takeover capability level, and decrease an assisted driving level. In this way, traveling safety of the means of delivery is ensured, and the deception behavior of the driver can be punished to some extent.

In a possible implementation, in step S204, the means of delivery may interact with the driver at a first frequency within second preset duration, and after detecting that the driver has the deception behavior, the means of delivery may interact with the driver at a second frequency within the second preset duration, to obtain a second interaction result, where the second frequency is higher than the first frequency. For example, the means of delivery may interact with the driver twice within five minutes before detecting that the driver has the deception behavior, and may interact with the driver four times within five minutes after detecting that the driver has the deception behavior. In this way, after it is detected that the behavior of the driver is inconsistent with the first interaction result, a period of interaction with the driver can be shortened, so that interaction with the driver can be performed more closely, to further ensure traveling safety of the means of delivery.

Optionally, in this implementation, the method 200 may further include: determining, based on the second interaction result, whether to adjust the second takeover capability level. In this way, whether to adjust the takeover capability level can be dynamically determined based on a result of interaction with the driver. This further effectively prevents a safety accident in the assisted driving mode.

In a possible implementation, in step S203, the means of delivery may obtain the first driving behavior information at a third frequency within third preset duration, and after detecting that the driver has the deception behavior, the means of delivery may obtain second driving behavior information at a fourth frequency within the third preset duration, where the fourth frequency is higher than the third frequency. For example, the means of delivery may obtain the first driving behavior information twice within five minutes before detecting that the driver has the deception behavior, and may obtain the second driving behavior information four times within five minutes after detecting that the driver has the deception behavior. In this way, the driving behavior information can be obtained more closely, to further ensure traveling safety of the means of delivery.

Optionally, content specifically included in the first driving behavior information and the second driving behavior information may be the same or different.

Optionally, in this implementation, the method 200 further includes: determining, based on the second interaction result and the second driving behavior information, whether to adjust the second takeover capability level. In this way, whether to adjust the second takeover capability level can be more accurately determined, to ensure traveling safety of the means of delivery.

In a possible implementation, the method 200 further includes: disabling an assisted driving function of the means of delivery. In this way, traveling safety of the means of delivery is ensured, and the deception behavior of the driver can be punished to some extent.

In an embodiment, the second driving behavior information includes driver status information, and the method 200 further includes: determining, based on the driver status information, whether to send alarm information.

For example, when it is determined, based on the driver status information, that the driver is in a poor driving status or is suddenly ill, it may be determined to send the alarm information.

Optionally, the driver status information may include one or more of a fatigue status of the driver, a heart rate of the driver, an emotion status of the driver, and a response speed of the driver.

Optionally, the means of delivery may send the alarm information to a server, or send the alarm information to a public security department or a first-aid center. If the foregoing monitoring method is performed by the server, the server may send the alarm information to the means of delivery to report an alarm to the driver, or send the alarm information to the public security department or the first-aid center.

It should be understood that, in embodiments of this application, unless otherwise stated or there is a logic conflict, terms and/or descriptions in all embodiments are consistent and may be mutually referenced, and technical features in different embodiments may be combined into a new embodiment based on an internal logical relationship thereof.

FIG. 3 is a schematic flowchart of another monitoring method according to an embodiment of this application. The method 300 may be performed by a means of delivery or a server. When the method 300 is performed by the means of delivery 100, the method 300 may be performed by the computing platform 130 in the means of delivery 100, or may be performed by a SoC in the computing platform 130, or may be performed by a processor in the computing platform 130. The method 300 is a detailed description of step S201 to step S205 in the method 200. The following describes the method 300 by using an example in which an execution body is a vehicle (a type of the means of delivery 100). The method 300 may include step S301 to step S305.

S301: Wake up driver takeover capability monitoring.

For example, after the vehicle detects that a driver enables an assisted driving mode at a level higher than L₂, the vehicle may wake up takeover capability monitoring.

S302: Output an initial takeover capability level based on environment feature information of the vehicle, behavior characteristic information of the driver, and an assisted driving level.

Optionally, before step S302, the method 300 further includes: collecting the traveling environment feature information of the vehicle and the behavior characteristic information of the driver. The environment feature information may be the environment information in the method 200, the behavior characteristic information may include the first driving behavior information and/or the facial expression information in the method 200, and the initial takeover capability level may be the first takeover capability level in the method 200.

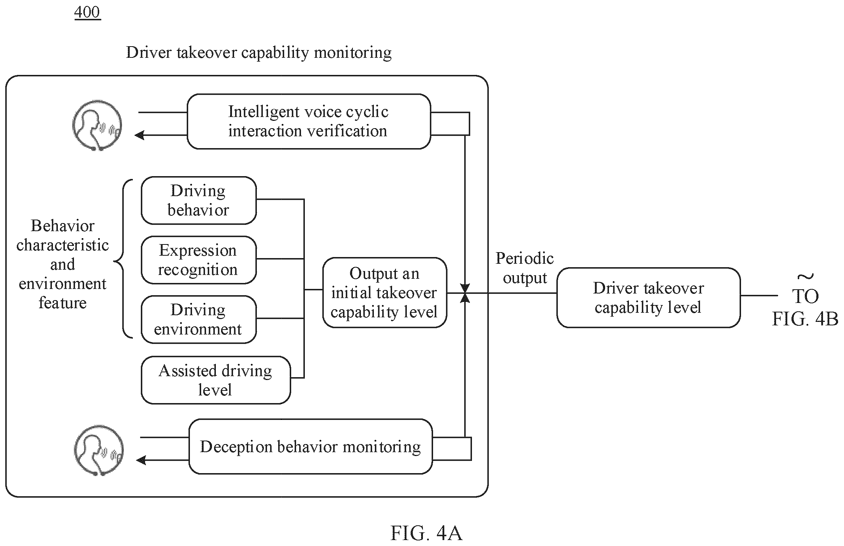

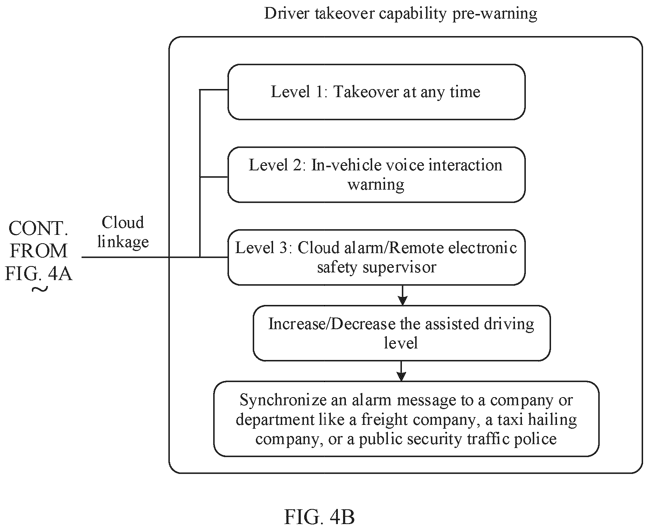

For example, as shown in FIG. 4A and FIG. 4B, the environment feature information may include traveling environment information of the vehicle (for example, traveling road condition information of the vehicle), and the behavior characteristic information of the driver may include driving behavior information and/or expression recognition information of the driver.

Optionally, in this step, a weight may be adjusted by using a neural network model. To be specific, the traveling environment information of the vehicle, the behavior characteristic information of the driver, and the assisted driving level are input into the neural network model, and the neural network model may output the initial takeover capability level. The neural network model may include but is not limited to a convolutional neural network (convolutional neural network, CNN) model or a recurrent neural network (recurrent neural network, RNN) model.

S303: Perform intelligent voice cyclic interaction verification and deception behavior monitoring.

For example, the vehicle may verify, based on a result of communication with the driver, whether the initial takeover capability level is accurate. For example, the vehicle queries, by using a voice assistant, whether the driver knows an assisted driving permission range of the vehicle at the initial takeover capability level. After an affirmative response of the driver is detected, step S304 is performed; or after an affirmative response of the driver is not detected, the initial takeover capability level is readjusted.

Optionally, the intelligent voice cyclic interaction verification may be periodically performed. For example, intelligent voice interaction verification is performed once every hour.

For example, the vehicle may determine, based on a result of interaction (including text communication and/or voice communication) with the driver, whether the driver knows a current takeover status of the vehicle, compare a result of communication with the driver with a behavior of the driver detected by a monitor, and determine whether the driver has a previous deception behavior, to comprehensively determine whether the driver conceals a takeover situation in current assisted driving. In addition, a historical behavior database of the driver may be further established to better analyze a driving behavior of the driver, to effectively prevent the driver from taking a chance.

For example, the vehicle performs voice interaction with the driver to obtain a voice interaction result, where the voice interaction result may include: voice text information and driver emotion information. The voice text information indicates that the driver confirms that the driver is not fatigued during driving, but the driver emotion information indicates that the driver is in a fatigue driving state. In this case, it may be determined that the driver has the deception behavior.

For another example, the voice interaction result indicates that the driver knows that the driver needs to step on a brake pedal of the means of delivery in an emergency at the first takeover capability level. However, when an emergency actually occurs, the monitor detects that the driver does not step on the brake pedal. In this case, it may be determined that the driver has the deception behavior.

Optionally, when it is frequently detected that the driver has a deception behavior, the vehicle may feed back the situation to a company to which the driver belongs. For example, when the driver is an employee of a freight company, if it is detected that the driver has frequent deception behaviors, the vehicle may feed back the situation to the freight company.

Optionally, when it is frequently detected that the driver has a deception behavior, the vehicle may take at least one of the following measures: increasing a takeover capability level, decreasing an assisted driving level, shortening a period of monitoring the driver, and shortening a period of voice interaction with the driver.

S304: Monitor a status of the driver, and update the takeover capability level in real time.

For example, step S303 may be periodically repeated to cyclically and dynamically monitor the status of the driver and determine whether the driver has the deception behavior, and the takeover capability level is updated in real time.

S305: Perform different processing based on the takeover capability level.

For example, as shown in FIG. 4A and FIG. 4B, the takeover capability level may be classified into three levels. The level 1 may indicate that the user may take over the vehicle at any time, and the vehicle may also properly increase an assisted driving level based on a driving environment. The level 2 may indicate that the vehicle may prompt, by using a voice, the driver to pay attention to driving safety, and shorten a monitoring period in step S304, to more closely observe whether a behavior of the driver changes, to adjust an assisted driving level. The level 3 may indicate that the vehicle may give a voice danger warning, and further shorten a monitoring period in S304, to more closely observe whether a behavior of the driver changes, to adjust an assisted driving level. If the driving behavior of the driver does not change for a long time (in this case, the driver may be in a poor driving status or may be suddenly ill), the vehicle may upload the situation to a cloud server for a cloud alarm. In addition, a remote electronic safety supervisor may be set on the cloud, and the remote electronic safety supervisor may feed back the alarm information to a related company or department (for example, a freight company, a taxi hailing company, or a public security traffic police) for intervention, to reduce a possibility of an accident.

In this embodiment of this application, after determining the initial takeover capability level, the vehicle may periodically perform voice interaction with the driver, and determine, based on the voice interaction result, whether to adjust the initial takeover capability level. In this way, the driver can be monitored in a complex and changeable driving scenario, to effectively prevent a safety accident in the assisted driving mode. In addition, the vehicle may further detect whether the driver has the deception behavior, to take a corresponding measure to further ensure traveling safety of the vehicle.

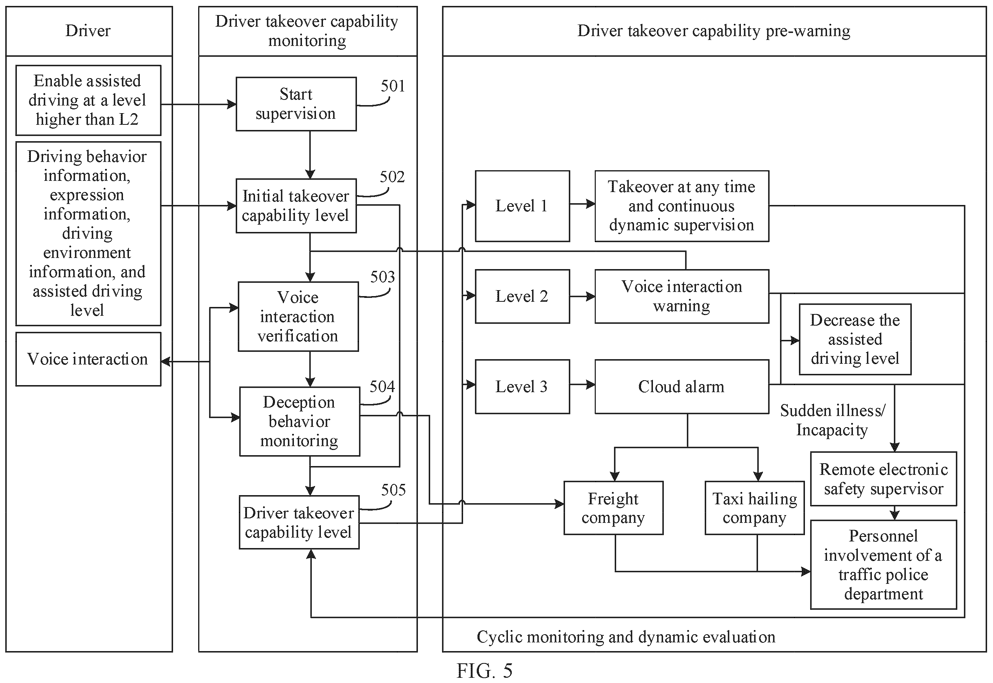

FIG. 5 is a schematic flowchart of another monitoring method according to an embodiment of this application. The method 500 describes another manner of implementing step S301 to step S305 in the method 300. The method 500 may include step S501 to step S505.

S501: A vehicle starts supervision.

For example, after the vehicle detects that a driver enables an assisted driving mode at a level higher than L₂, the vehicle may start supervision.

S502: The vehicle determines an initial takeover capability level.

For example, the vehicle may determine the initial takeover capability level based on at least one of the following: driving behavior information of the driver, expression information of the driver, traveling environment information of the vehicle, or an assisted driving level of the vehicle. The driving behavior information of the driver may be content included in the first driving behavior information in the method 200, the expression information of the driver may be the facial expression information in the method 200, the traveling environment information of the vehicle may be the environment information in the method 200, and the initial takeover capability level may be the first takeover capability level in the method 200.

Optionally, the driving behavior information of the driver, the expression information of the driver, the traveling environment information of the vehicle, or the assisted driving level of the vehicle may be input into a neural network model, to output the initial takeover capability level.

S503: The vehicle performs voice interaction verification with the driver.

For example, the vehicle may query, by using a voice assistant, whether the driver knows an assisted driving permission range of the vehicle at the initial takeover capability level. After an affirmative response of the driver is detected, step S504 is performed; or after an affirmative response of the driver is not detected, the initial takeover capability level is readjusted.

Optionally, the vehicle may periodically perform voice interaction with the driver. For example, voice interaction verification is performed once every hour.

S504: The vehicle performs deception behavior monitoring.

For example, the vehicle may determine, based on a result of interaction (including text communication and/or voice communication) with the driver, whether the driver knows a current takeover status of the vehicle, compare a result of communication with the driver with a behavior of the driver detected by a monitor, and determine whether the driver has a previous deception behavior, to comprehensively determine whether the driver conceals a takeover situation in current assisted driving. In addition, a historical behavior database of the driver may be further established to better analyze a driving behavior of the driver, to effectively prevent the driver from taking a chance.

For example, the vehicle performs voice interaction with the driver to obtain a voice interaction result, where the voice interaction result may include: voice text information and driver emotion information. The voice text information indicates that the driver confirms that the driver is not fatigued during driving, but the driver emotion information indicates that the driver is in a fatigue driving state. In this case, it may be determined that the driver has the deception behavior.

For another example, the voice interaction result indicates that the driver knows that the driver needs to step on a brake pedal of the means of delivery in an emergency at the first takeover capability level. However, when an emergency actually occurs, the monitor detects that the driver does not step on the brake pedal. In this case, it may be determined that the driver has the deception behavior.

Optionally, when it is frequently detected that the driver has a deception behavior, the vehicle may feed back the situation to a company to which the driver belongs. For example, when the driver is an employee of a freight company or a taxi hailing company, if it is detected that the driver has frequent deception behaviors, the vehicle may feed back the situation to the freight company or the taxi hailing company.

Optionally, when it is frequently detected that the driver has a deception behavior, the vehicle may take at least one of the following measures: increasing a takeover capability level, decreasing an assisted driving level, shortening a period of monitoring the driver, and shortening a period of voice interaction with the driver.

S505: The vehicle determines a driver takeover capability level.

For example, the vehicle may classify the driver takeover capability level into three levels. The level 1 may indicate that the user may take over the vehicle at any time, and the vehicle may also properly increase an assisted driving level based on a driving environment. The level 2 may indicate that the vehicle may prompt, by using a voice, the driver to pay attention to driving safety, and shorten a monitoring period, to more closely observe whether a behavior of the driver changes, to adjust an assisted driving level. The level 3 may indicate that the vehicle may give a voice danger warning, and further shorten a monitoring period, to more closely observe whether a behavior of the driver changes, to adjust an assisted driving level. If the behavior of the driver does not change for a long time (for example, the driver is suddenly ill or is incapacitated), the vehicle may upload the situation to a cloud server for a cloud alarm. In addition, a remote electronic safety supervisor may be set on the cloud, and the remote electronic safety supervisor may feed back the alarm information to a company or department (for example, a freight company, a taxi hailing company, or a public security traffic police) for intervention, to reduce or prevent a possibility of an accident.

In this embodiment of this application, after determining the initial takeover capability level, the vehicle may periodically perform voice interaction with the driver, and determine, based on the voice interaction result, whether to adjust the initial takeover capability level. In this way, the driver can be monitored in a complex and changeable driving scenario, to effectively prevent a safety accident in the assisted driving mode. In addition, the vehicle may further detect whether the driver has the deception behavior, to take a corresponding measure to further ensure traveling safety of the vehicle.

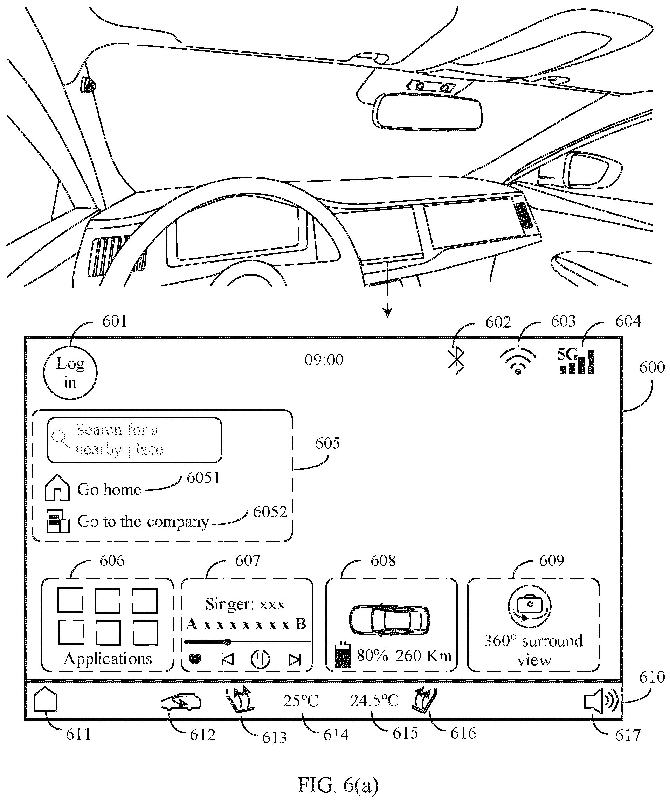

FIG. 6(a) to FIG. 6(g) are a diagram of an application scenario to which a monitoring method according to an embodiment of this application is applicable. The method 200, the method 300, and the method 500 are applicable to the scenario.

As shown in FIG. 6(a), an interface 600 and a function bar 610 are displayed on a large central display of a vehicle. The interface 600 includes user account login information 601 (the current vehicle has not logged in to an account), a Bluetooth function icon 602, a Wi-Fi function icon 603, a cellular network signal icon 604, a vehicle-mounted map application search box 605, a widget 606 for switching to display all applications installed on the vehicle, a widget 607 for switching to display a vehicle-mounted music application, a widget 608 for displaying a remaining state of charge and a remaining mileage of the vehicle, and a widget 609 for displaying a 360-degree (°) surround view function of the vehicle. The vehicle-mounted map application search box 605 may include a "Go home" control 6051 and a "Go to the company" control 6052 that are set by a user. The function bar 610 includes an icon 611 for switching to display a home screen of the large central display, an icon 612 for internal air circulation of the vehicle, an icon 613 for a driver's seat heating function, an icon 614 for displaying an air conditioner temperature of a driver area, an icon 615 for displaying an air conditioner temperature of a front passenger area, an icon 616 for displaying a front passenger's seat heating function, and a volume setting icon 617.

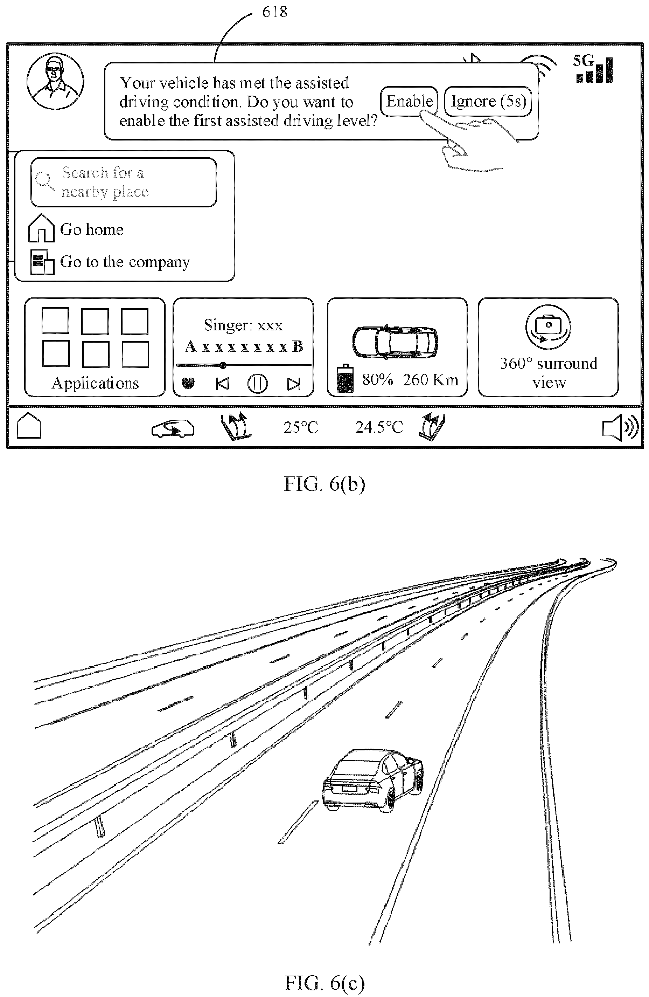

On a graphical user interface (graphical user interface, GUI) shown in FIG. 6(b), the GUI includes a prompt box 618, used to inform a driver that the vehicle has met an assisted driving condition and whether to enable a first assisted driving level. When the vehicle detects that the driver taps an "Enable" control in the prompt box 618, the vehicle may enable the first assisted driving level.

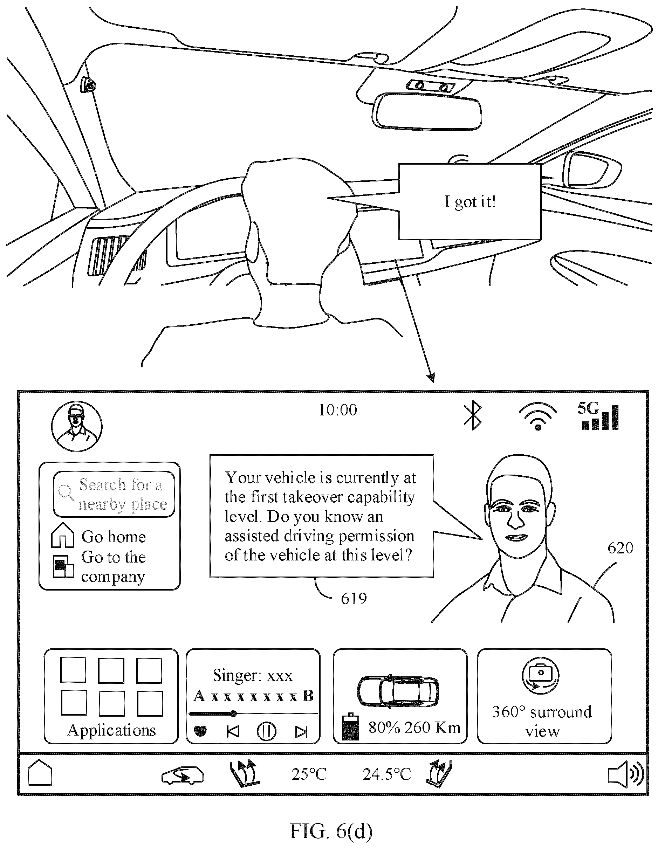

As shown in FIG. 6(c), the vehicle travels on a road in this case. After enabling the first assisted driving level, the vehicle may collect ambient environment information through a sensor. The sensor may include one or more of sensors such as a DVR, a gravity sensor, and an external camera (for example, a surround view camera). In addition, the vehicle may determine a first takeover capability level based on the environment information and the first assisted driving level, where the first takeover capability level is used for a takeover capability pre-warning of the driver. After the first takeover capability level is determined, a GUI shown in FIG. 6(d) may be displayed on the large central display of the vehicle.

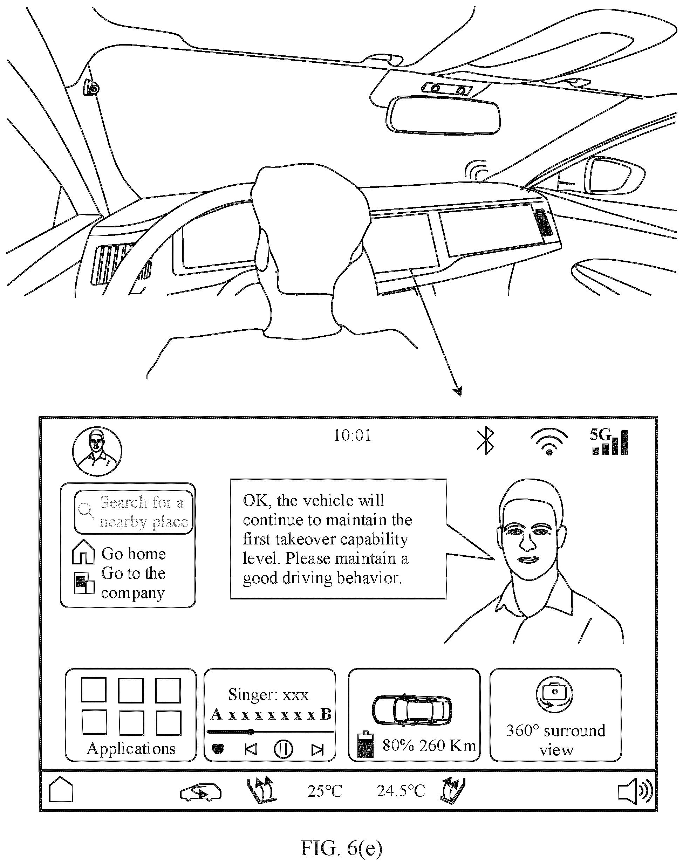

On the GUI in FIG. 6(d), the GUI includes an interaction text 619 and a voice assistant 620. The voice assistant 620 may interact with the driver in a form of voice. In this case, the voice assistant 620 asks the driver: "The vehicle is currently at the first takeover capability level. Do you know an assisted driving permission of the vehicle at this level?" After an affirmation response of the driver is detected, a GUI shown in FIG. 6(e) may be displayed on the large central display of the vehicle. In addition, the voice assistant 620 may periodically perform voice interaction with the driver. For example, in a scenario shown in FIG. 6(d), the voice assistant may interact with the driver once every hour.

On the GUI shown in FIG. 6(e), after the affirmation response of the driver is detected, the voice assistant 620 may notify, in a form of voice, the driver that "The vehicle will continue to maintain the first takeover capability level. Please maintain a good driving behavior". In addition, after performing voice interaction with the driver, the voice assistant 620 may periodically (for example, once every 30 minutes) monitor a driving behavior of the driver, and determine whether the driving behavior of the driver is consistent with a voice interaction result.

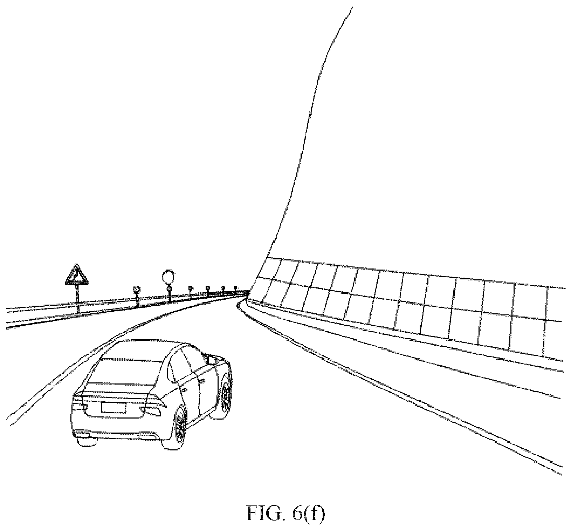

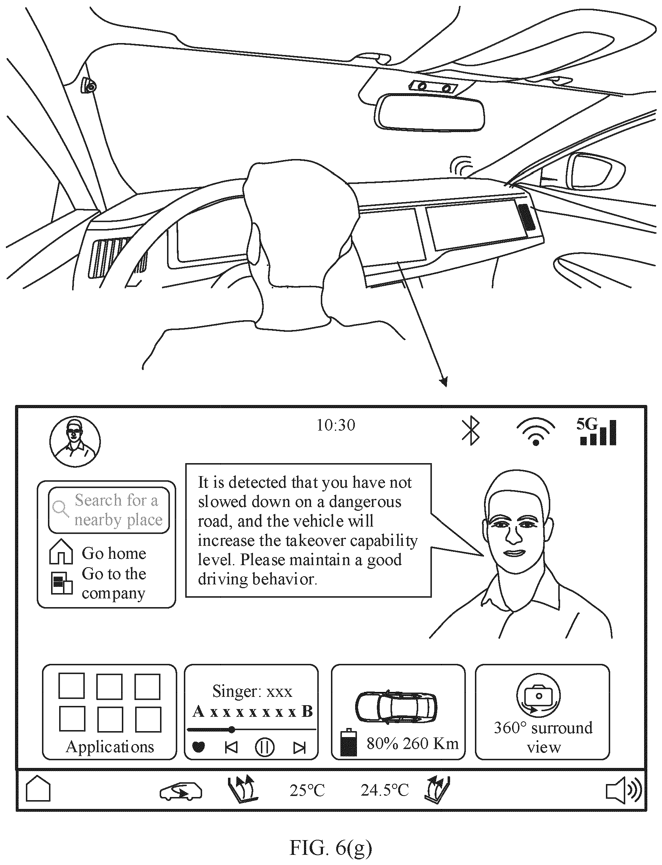

For example, it is specified at the first takeover capability level that the driver needs to decelerate on a turning road section in a mountainous area, and the voice interaction result between the voice assistant 620 and the driver also indicates that the driver knows the foregoing specification. As shown in FIG. 6(f), when the vehicle actually travels on a turning road section in a mountainous area, the vehicle detects that the driver does not step on a brake pedal. In this case, the vehicle may determine that the driving behavior of the driver is inconsistent with the voice interaction result, in other words, in this case, the driver has a deception behavior, and a GUI shown in FIG. 6(g) may be displayed on the large central display of the vehicle.

On the GUI shown in FIG. 6(g), the voice assistant 620 may inform, in a form of voice, the user that "It is detected that you have not slowed down on a dangerous road section, and the vehicle will increase the takeover capability level. Please maintain a good driving behavior". After the takeover capability level is increased, an assisted driving level of the vehicle may be decreased, a period of interaction between the voice assistant 620 and the driver is shortened (for example, adjusted to twice every hour), and a period of monitoring the driving behavior of the driver by the vehicle is shortened (for example, adjusted to once every 15 minutes). In addition, during voice interaction, if no response is received from the driver for a long time, and the vehicle detects that the driver is in a poor driving state or is suddenly ill at this time, the vehicle may send alarm information to a public security department and a first-aid center.

It should be understood that the application scenario shown in FIG. 6(a) to FIG. 6(f) is merely an example for description, and shall not be construed as a limitation on this application. Specific content of voice interaction between the vehicle and the driver and the takeover capability level may be set based on an actual situation in the monitoring method.

It should be further understood that, in embodiments of this application, unless otherwise stated or there is a logic conflict, terms and/or descriptions in all embodiments are consistent and may be mutually referenced, and technical features in different embodiments may be combined into a new embodiment based on an internal logical relationship thereof.

An embodiment of this application further provides an apparatus configured to implement any one of the foregoing methods. The apparatus includes units configured to implement steps performed by the means of delivery 100 in any one of the foregoing methods.

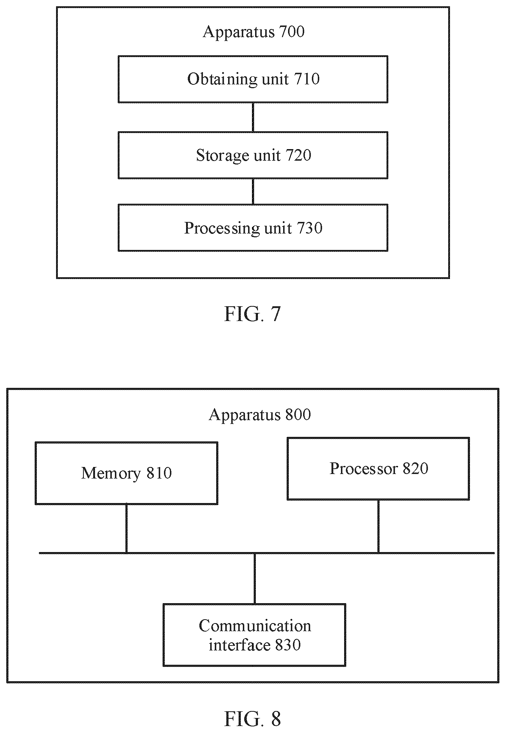

FIG. 7 is a diagram of a monitoring apparatus 700 according to an embodiment of this application. The apparatus 700 may include an obtaining unit 710, a storage unit 720, and a processing unit 730. The obtaining unit 710 is configured to obtain instructions and/or data. The obtaining unit 710 may also be referred to as a communication interface or a communication unit. The storage unit 720 is configured to: implement a corresponding storage function, and store corresponding instructions and/or data. The processing unit 730 is configured to process the data. The processing unit 730 may read the instructions and/or the data in the storage unit, so that the apparatus 700 implements the foregoing monitoring methods.

The apparatus 700 includes the obtaining unit 710 and the processing unit 730. The processing unit 730 is configured to detect that a means of delivery enables a first assisted driving level. The obtaining unit 710 is configured to obtain environment information around the means of delivery. The processing unit 730 is further configured to: determine a first takeover capability level based on the environment information and the first assisted driving level, where the first takeover capability level is used for a takeover capability pre-warning of a driver; interact with the driver based on the first takeover capability level, to obtain a first interaction result; and determine, based on the first interaction result, whether to adjust the first takeover capability level.

**In a** possible implementation, the obtaining unit 710 is further configured to obtain first driving behavior information and facial expression information of the driver, where the first driving behavior information indicates a driving status of the driver and/or a traveling status of the means of delivery. The processing unit 730 is specifically configured to determine the first takeover capability level based on the first driving behavior information, the facial expression information, the environment information, and the first assisted driving level.

In a possible implementation, the processing unit 730 is specifically configured to determine, based on the first interaction result and the first driving behavior information, whether to adjust the first takeover capability level.

In a possible implementation, the first driving behavior information includes at least one of the following content: driver status information, accelerator pedal opening degree information, brake pedal opening degree information, steering wheel angle information, steering wheel pressure information, and a quantity of times that a tire of the means of delivery crosses a road sideline within first preset duration.

In a possible implementation, the first interaction result indicates that the driver confirms the first takeover capability level. The processing unit 730 is specifically configured to determine, based on the first interaction result, to maintain the first takeover capability level. The processing unit 730 is further configured to determine, based on the first driving behavior information and the first interaction result, that a behavior of the driver is inconsistent with the first interaction result.

In a possible implementation, the processing unit 730 is further configured to adjust the first takeover capability level to a second takeover capability level, where the second takeover capability level corresponds to a second assisted driving level, and the second assisted driving level is lower than the first assisted driving level.

In a possible implementation, the processing unit 730 is specifically configured to interact with the driver at a first frequency within second preset duration. The processing unit 730 is further configured to interact with the driver at a second frequency within the second preset duration, to obtain a second interaction result, where the second frequency is higher than the first frequency.

In a possible implementation, the processing unit 730 is specifically configured to interact with the driver at a first frequency within second preset duration. The processing unit 730 is further configured to: interact with the driver at a second frequency within the second preset duration, to obtain a second interaction result, where the second frequency is higher than the first frequency; and determine, based on the second interaction result, whether to adjust the second takeover capability level.

In a possible implementation, the obtaining unit 710 is specifically configured to obtain the first driving behavior information at a third frequency within third preset duration. The processing unit 730 is further configured to obtain second driving behavior information at a fourth frequency within the third preset duration, where the fourth frequency is higher than the third frequency.

In a possible implementation, the obtaining unit 710 is specifically configured to obtain the first driving behavior information at a third frequency within third preset duration. The processing unit 730 is further configured to: obtain second driving behavior information at a fourth frequency within the third preset duration, where the fourth frequency is higher than the third frequency; and determine, based on the second interaction result and the second driving behavior information, whether to adjust the second takeover capability level.

In a possible implementation, the second driving behavior information includes driver status information. The processing unit 730 is further configured to determine, based on the driver status information, whether to send alarm information.

In a possible implementation, the processing unit 730 is further configured to disable an assisted driving function of the means of delivery.

Optionally, if the apparatus 700 is located in the means of delivery 100, the processing unit 730 may be the processor 131 shown in FIG. 1.

FIG. 8 shows another monitoring apparatus 800 according to an embodiment of this application. The apparatus 800 may be used in the means of delivery 100 in FIG. 1.

The apparatus 800 includes a memory 810, a processor 820, and a communication interface 830. The memory 810, the processor 820, and the communication interface 830 are connected through an internal connection path. The memory 810 is configured to store instructions. The processor 820 is configured to execute the instructions stored in the memory 810, to control the communication interface 830 to obtain information, or enable the apparatus 800 to implement the foregoing monitoring methods. Optionally, the memory 810 may be coupled to the processor 820 through an interface, or may be integrated with the processor 820.

It should be noted that the communication interface 830 uses a transceiver apparatus like but not limited to a transceiver. The communication interface 830 may further include an input/output interface (input/output interface).

The processor 820 stores one or more computer programs, and the one or more computer programs include instructions. When the instructions are run by the processor 820, the monitoring apparatus 800 is enabled to perform the monitoring methods in the foregoing embodiments.

In an implementation process, the steps in the foregoing methods may be performed by using an integrated logic circuit of hardware in the processor 820 or instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 810. The processor 820 reads information from the memory 810, and completes the steps in the foregoing methods in combination with hardware of the processor. To avoid repetition, details are not described herein again.

Optionally, the communication interface 830 in FIG. 8 may implement the obtaining unit 710 in FIG. 7, the memory 810 in FIG. 8 may implement the storage unit 720 in FIG. 7, and the processor 820 in FIG. 8 may implement the processing unit 730 in FIG. 7.

Optionally, the apparatus 700 or the apparatus 800 may be a computing platform. The computing platform may be a vehicle-mounted computing platform or a cloud computing platform.

Optionally, the apparatus 700 or the apparatus 800 may be located in the means of delivery 100 in FIG. 1.

Optionally, the apparatus 700 or the apparatus 800 may be the computing platform 130 in the means of delivery in FIG. 1.

An embodiment of this application further provides a computer-readable storage medium. The computer-readable storage medium stores program code. When the computer program code is run on a computer, the computer is enabled to perform any one of the methods in FIG. 2 to FIG. 5.

An embodiment of this application further provides a computer program product. The computer product includes a computer program. When the computer program is run, a computer is enabled to perform any one of the methods in FIG. 2 to FIG. 5.

An embodiment of this application further provides a chip, including a circuit. The circuit is configured to perform any one of the methods in FIG. 2 to FIG. 5.

An embodiment of this application further provides a means of delivery, including any monitoring apparatus in FIG. 7 or FIG. 8.

An embodiment of this application further provides a server, including any monitoring apparatus in FIG. 7 or FIG. 8.

An embodiment of this application further provides a monitoring system, including the foregoing means of delivery and the foregoing server.

It should be understood that division into units in the foregoing apparatuses is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a programmable logic device PLD. An FPGA is used as an example. The hardware circuit may include a large quantity of logic gate circuits, and a connection relationship between the logic gate circuits is configured by using a configuration file, to implement functions of some or all of the foregoing units. All units in the foregoing apparatuses may be implemented in a form of software invoked by the processor, or all units may be implemented in a form of hardware circuit, or some units may be implemented in a form of software invoked by the processor, and a remaining part may be implemented in a form of hardware circuit.

In embodiments of this application, the processor is a circuit having a signal processing capability. In an implementation, the processor may be a circuit having a capability of instruction reading and running, for example, a CPU, a microprocessor, a GPU (which may be understood as a microprocessor), or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a programmable logic device PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatuses may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units in the foregoing apparatuses may be integrated, or may be implemented independently. In an implementation, these units are integrated together and implemented in a form of SOC. The SOC may include at least one processor, configured to implement any one of the methods or implement functions of the units in the apparatuses. Types of the at least one processor may be different, for example, the at least one processor includes a CPU and an FPGA, a CPU and an artificial intelligence processor, or a CPU and a GPU.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In several embodiments provided in this application, it should be understood that the disclosed system, apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and parts displayed as units may or may not be physical units, may be located in one location, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A monitoring method, wherein the method comprises:
detecting that a means of delivery enables a first assisted driving level;
obtaining environment information around the means of delivery;
determining a first takeover capability level based on the environment information and the first assisted driving level, wherein the first takeover capability level is used for a takeover capability pre-warning of a driver;
interacting with the driver based on the first takeover capability level, to obtain a first interaction result; and
determining, based on the first interaction result, whether to adjust the first takeover capability level.

2. The method according to claim 1, wherein the method further comprises:
obtaining first driving behavior information and facial expression information of the driver, wherein the first driving behavior information indicates a driving status of the driver and/or a traveling status of the means of delivery; and
the determining a first takeover capability level based on the environment information and the first assisted driving level comprises:
determining the first takeover capability level based on the first driving behavior information, the facial expression information, the environment information, and the first assisted driving level.

3. The method according to claim 2, wherein the determining, based on the first interaction result, whether to adjust the first takeover capability level comprises:
determining, based on the first interaction result and the first driving behavior information, whether to adjust the first takeover capability level.

4. The method according to claim 2 or 3, wherein the first driving behavior information comprises at least one of the following content: driver status information, accelerator pedal opening degree information, brake pedal opening degree information, steering wheel angle information, steering wheel pressure information, and a quantity of times that a tire of the means of delivery crosses a road sideline within first preset duration.

5. The method according to any one of claims 2 to 4, wherein the first interaction result indicates that the driver confirms the first takeover capability level, and the determining, based on the first interaction result, whether to adjust the first takeover capability level comprises:
determining, based on the first interaction result, to maintain the first takeover capability level; and
the method further comprises:
determining, based on the first driving behavior information and the first interaction result, that a behavior of the driver is inconsistent with the first interaction result.

6. The method according to claim 5, wherein the method further comprises:
adjusting the first takeover capability level to a second takeover capability level, wherein the second takeover capability level corresponds to a second assisted driving level, and the second assisted driving level is lower than the first assisted driving level.

7. The method according to claim 6, wherein the interacting with the driver based on the first takeover capability level comprises: interacting with the driver at a first frequency within second preset duration, and the method further comprises:
interacting with the driver at a second frequency within the second preset duration, to obtain a second interaction result, wherein the second frequency is higher than the first frequency; and
determining, based on the second interaction result, whether to adjust the second takeover capability level.

8. The method according to claim 7, wherein the obtaining first driving behavior information comprises: obtaining the first driving behavior information at a third frequency within third preset duration, and the method further comprises:
obtaining second driving behavior information at a fourth frequency within the third preset duration, wherein the fourth frequency is higher than the third frequency; and
the determining, based on the second interaction result, whether to adjust the second takeover capability level comprises:
determining, based on the second interaction result and the second driving behavior information, whether to adjust the second takeover capability level.

9. The method according to claim 8, wherein the second driving behavior information comprises driver status information, and the method further comprises:
determining, based on the driver status information, whether to send alarm information.

10. The method according to claim 5, wherein the method further comprises: disabling an assisted driving function of the means of delivery.

11. A monitoring apparatus, comprising an obtaining unit and a processing unit, wherein
the processing unit is configured to detect that a means of delivery enables a first assisted driving level;
the obtaining unit is configured to obtain environment information around the means of delivery; and
the processing unit is further configured to:
determine a first takeover capability level based on the environment information and the first assisted driving level, wherein the first takeover capability level is used for a takeover capability pre-warning of a driver;
interact with the driver based on the first takeover capability level, to obtain a first interaction result; and
determine, based on the first interaction result, whether to adjust the first takeover capability level.

12. The apparatus according to claim 11, wherein
the obtaining unit is further configured to obtain first driving behavior information and facial expression information of the driver, wherein the first driving behavior information indicates a driving status of the driver and/or a traveling status of the means of delivery; and
the processing unit is specifically configured to determine the first takeover capability level based on the first driving behavior information, the facial expression information, the environment information, and the first assisted driving level.

13. The apparatus according to claim 12, wherein
the processing unit is specifically configured to determine, based on the first interaction result and the first driving behavior information, whether to adjust the first takeover capability level.

14. The apparatus according to claim 12 or 13, wherein
the first driving behavior information comprises at least one of the following content: driver status information, accelerator pedal opening degree information, brake pedal opening degree information, steering wheel angle information, steering wheel pressure information, and a quantity of times that a tire of the means of delivery crosses a road sideline within first preset duration.

15. The apparatus according to any one of claims 12 to 14, wherein the first interaction result indicates that the driver confirms the first takeover capability level;
the processing unit is specifically configured to determine, based on the first interaction result, to maintain the first takeover capability level; and
the processing unit is further configured to determine, based on the first driving behavior information and the first interaction result, that a behavior of the driver is inconsistent with the first interaction result.

16. The apparatus according to claim 15, wherein
the processing unit is further configured to adjust the first takeover capability level to a second takeover capability level, wherein the second takeover capability level corresponds to the second assisted driving level, and the second assisted driving level is lower than the first assisted driving level.

17. The apparatus according to claim 16, wherein
the processing unit is specifically configured to interact with the driver at a first frequency within second preset duration; and
the processing unit is further configured to:
interact with the driver at a second frequency within the second preset duration, to obtain a second interaction result, wherein the second frequency is higher than the first frequency; and
determine, based on the second interaction result, whether to adjust the second takeover capability level.

18. The apparatus according to claim 17, wherein
the obtaining unit is specifically configured to obtain the first driving behavior information at a third frequency within third preset duration; and
the processing unit is further configured to:
obtain second driving behavior information at a fourth frequency within the third preset duration, wherein the fourth frequency is higher than the third frequency; and
determine, based on the second interaction result and the second driving behavior information, whether to adjust the second takeover capability level.

19. The apparatus according to claim 18, wherein the second driving behavior information comprises driver status information; and
the processing unit is further configured to determine, based on the driver status information, whether to send alarm information.

20. The apparatus according to claim 15, wherein
the processing unit is further configured to disable an assisted driving function of the means of delivery.

21. A monitoring apparatus, comprising a processor and a memory, wherein the processor is coupled to the memory, and is configured to read and execute instructions in the memory, to perform the method according to any one of claims 1 to 10.

22. A computer-readable storage medium, wherein the computer-readable storage medium stores program code, and when the computer program code is run on a computer, the computer is enabled to perform the method according to any one of claims 1 to 10.

23. A chip, comprising a circuit, wherein the circuit is configured to perform the method according to any one of claims 1 to 10.

24. A means of delivery, comprising the monitoring apparatus according to any one of claims 11 to 20.

25. A server, comprising the monitoring apparatus according to any one of claims 11 to 20.

26. A monitoring system, comprising the means of delivery according to claim 24 and the server according to claim 25.
